# EUROPEAN PATENT APPLICATION

(11) **EP 4 684 864 A2**
(43) Date of publication of application: **28.01.2026**
(21) Application number: 25184398.3
(22) Date of filing: 23.06.2025
(51) Int. Cl.: B01D 53/14, B01D 53/32

(54) **ACIDIC GAS RECOVERY APPARATUS AND ACIDIC GAS RECOVERY METHOD**

(30) Priority: 05.07.2024 JP 2024109006
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: KATO, Yasuhiro, Kawasaki-shi, Kanagawa (JP); MURAI, Shinji, Kawasaki-shi, Kanagawa (JP); MORIGAKI, Hayato, Kawasaki-shi, Kanagawa (JP); MAO, Mengchieh, Kawasaki-shi, Kanagawa (JP); MURAOKA, Daigo, Kawasaki-shi, Kanagawa (JP); FUJITA, Koshito, Kawasaki-shi, Kanagawa (JP); MURAMATSU, Takehiko, Kawasaki-shi, Kanagawa (JP)
(74) Representative: Hoffmann Eitle

(57) **Abstract**

Provided are an acidic gas recovery apparatus and a method for recovering an acidic gas from an exhaust gas or the air that can be easily continuously operated without requiring additional replenishment even when an acidic gas absorption component leaks.

An acidic gas recovery apparatus including:
an acidic gas absorption unit configured to bring a gas to be treated containing an acidic gas into contact with an acidic gas absorbent containing an alkaline substance, and allow the acidic gas absorbent to absorb at least a part of the acidic gas; and
a regeneration unit configured to regenerate the acidic gas absorbent that has absorbed the acidic gas by transferring an anion derived from the acidic gas to an acidic gas recovery liquid containing an acidic substance by electrodialysis, in which
the acidic gas absorption unit and the regeneration unit are connected so that the acidic gas absorbent circulates.

## Description

### TECHNICAL FIELD

The present embodiment relates to an acidic gas recovery apparatus using electrodialysis and an acidic gas recovery method.

### BACKGROUND ART

In thermal power plants and steel mills that use a large amount of fossil fuels, combustion exhaust gas generated by burning the fossil fuels in boilers, coal gasification gas (gasification gas) obtained by gasifying coal, natural gas, and the like contain, for example, acidic gas components such as carbon dioxide (CO₂), SOx, NOx, and H₂S.

Conventionally, in order to suppress release of the acidic gas components contained in such combustion exhaust gas or the like into air, a method has been extensively studied in which a gas containing an acidic gas component is brought into gas-liquid contact with an absorbent containing an amino group-containing compound (amine-based compound) in an absorption tower to absorb the acidic gas component into the absorbent, to recover the acidic gas component from a gas to be treated.

Further, in recent years, in order to reduce greenhouse gases, a direct air capture (DAC) technology for recovering carbon dioxide from the air instead of exhaust gases has also been intensively studied.

However, a technique for recovering an acidic gas by heating or decompressing the absorbent that has absorbed the acidic gas requires a large amount of energy for heating. Therefore, in order to recover the acidic gas, a technique using an electrodialysis method instead of heating has also been studied.

When the electrodialysis method is used for recovering the acidic gas, an acidic gas absorbent and an acidic gas recovery liquid are separated by an ion exchange membrane in an electrodialysis apparatus, but a part of an acidic gas absorbent component may leak into the acidic gas recovery liquid through the ion exchange membrane due to diffusion or the like, and acidic gas absorption performance of the acidic gas absorbent may be deteriorated, and thus it is necessary to periodically replenish the absorbent component, and a large amount of an acidic gas absorption component is required.

In addition, since the acidic gas recovery liquid needs to have a composition having a higher acidity than the acidic gas absorbent, it is necessary to reduce concentration of the acidic gas absorption component in the acidic gas recovery liquid or to add a component that increases the acidity. Then, the acidic gas recovery liquid may be reused by being mixed with the acidic gas absorbent, however, if the acidic gas recovery liquid is directly mixed with the acidic gas absorbent, the acidic gas absorption performance of the acidic gas absorbent is reduced, or energy efficiency is reduced in the electrodialysis, and thus an amount of the acidic gas absorbent component leaking into the acidic gas recovery liquid needs to be reduced as much as possible.

### CITATION LIST

### PATENT LITERATURE

Patent Literature 1: Japanese Patent No. 6659293
Patent Literature 2: Japanese Patent No. 5750220

### SUMMARY OF THE INVENTION

### OBJECT OF THE INVENTION

In order to reduce the greenhouse gas, it is desired to further reduce energy for enhancing a greenhouse gas reduction effect of a method for recovering carbon dioxide from the exhaust gas or the air. From such a viewpoint, it has been studied to obtain the greenhouse gas reduction effect by using electrodialysis in the method for recovering carbon dioxide from the exhaust gas or the air. In such a method, the acidic gas is absorbed into the acidic gas absorbent, while the acidic gas component is transferred from the acidic gas absorbent that has absorbed the acidic gas to the acidic gas recovery liquid by electrodialysis. However, it is not easy to eliminate leakage of the acidic gas absorption component into the acidic gas recovery liquid during electrodialysis.

The present embodiment has been made in view of such circumstances, and an object thereof is to provide an acidic gas recovery apparatus and a method for recovering the acidic gas from the exhaust gas or the air that can be easily continuously operated without requiring additional replenishment of the acidic gas absorption component even when concentration of the acidic gas absorbent decreases due to leakage of the acidic gas absorption component.

### SOLUTION TO PROBLEM

An acidic gas recovery apparatus according to an embodiment includes:
an acidic gas absorption unit configured to bring a gas to be treated containing an acidic gas into contact with an acidic gas absorbent containing an alkaline substance, and allow the acidic gas absorbent to absorb at least a part of the acidic gas to discharge a rich acidic gas absorbent that has absorbed the acidic gas and the gas to be treated from which the acidic gas has been removed; and
a regeneration unit configured to regenerate the acidic gas absorbent by transferring an anion derived from the acidic gas contained in the rich acidic gas absorbent to an acidic gas recovery liquid containing an acidic substance, in which
the acidic gas absorption unit and the regeneration unit are connected so that the acidic gas absorbent circulates, and
the regeneration unit includes, between a cathode and an anode facing each other, an acidic gas absorbent compartment, an acidic gas recovery liquid compartment, and a membrane disposed between the acidic gas absorbent compartment and the acidic gas recovery liquid compartment, the membrane being selected from a cation exchange membrane, an anion exchange membrane, or a bipolar membrane, and regenerates the acidic gas absorbent by electrodialysis to transfer and separate the anion derived from the acidic gas from the acidic gas absorbent introduced into the acidic gas absorbent compartment to the acidic gas recovery liquid introduced into the acidic gas recovery liquid compartment.

An acidic gas recovery method according to the embodiment including the following steps (a) to (c):
a step (a) of bringing a gas to be treated containing an acidic gas into contact with an acidic gas absorbent containing an alkaline substance to allow the acidic gas absorbent to absorb the acidic gas in the gas to be treated to obtain a rich acidic gas absorbent;
a step (b) of regenerating the acidic gas absorbent by transferring and separating an anion derived from the acidic gas from the rich acidic gas absorbent into an acidic gas recovery liquid containing an acidic substance by electrodialysis, and simultaneously converting the acidic gas recovery liquid into a rich recovery liquid; and
a step (c) of mixing at least a part of the acidic gas recovery liquid in a step of introducing the acidic gas absorbent regenerated in the step (b) into the acidic gas absorbent in the step (a).

### ADVANTAGEOUS EFFECTS OF THE INVENTION

According to the embodiment, it is possible to obtain an acidic gas recovery apparatus and a method for recovering an acidic gas from an exhaust gas or the air that can be easily continuously operated without requiring additional replenishment even when an acidic gas absorption component leaks.

### BRIEF DESCRIPTION OF DRAWINGS

FIG. 1 is a schematic diagram illustrating a configuration of an acidic gas recovery apparatus according to an embodiment;
FIG. 2 is a schematic diagram illustrating a configuration of a regeneration unit used in the acidic gas recovery apparatus according to the embodiment;
FIG. 3 is a schematic diagram illustrating the configuration of the acidic gas recovery apparatus according to the embodiment;
FIG. 4 is a schematic diagram illustrating a configuration of a secondary regeneration unit used in the acidic gas recovery apparatus according to the embodiment;
FIG. 5 is a schematic diagram illustrating the configuration of the acidic gas recovery apparatus according to the embodiment;
FIG. 6 is a schematic diagram illustrating the configuration of the regeneration unit used in the acidic gas recovery apparatus according to the embodiment;
FIG. 7 is a schematic diagram illustrating the configuration of the regeneration unit used in the acidic gas recovery apparatus according to the embodiment;
FIG. 8 is a schematic diagram illustrating the configuration of the regeneration unit used in the acidic gas recovery apparatus according to the embodiment;
FIG. 9 is a schematic diagram illustrating the configuration of the regeneration unit used in the acidic gas recovery apparatus according to the embodiment; and
FIG. 10 is a schematic diagram illustrating the configuration of the acidic gas recovery apparatus according to the embodiment.

### BEST MODE FOR CARRYING OUT THE INVENTION

Hereinafter, embodiments of the present invention will be described in detail with reference to the drawings. In the present specification, a case where an acidic gas is carbon dioxide (CO₂) will be described in detail, but the embodiments are not limited only to the case where the acidic gas is carbon dioxide (CO₂).

### [First acidic gas recovery apparatus]

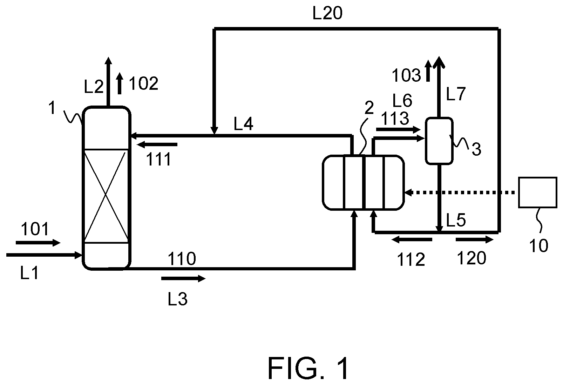

FIG. 1 is a schematic diagram illustrating a basic configuration of an acidic gas recovery apparatus according to a preferred embodiment of the present invention.

The acidic gas recovery apparatus illustrated in FIG. 1 includes an acidic gas absorption unit 1 and a regeneration unit 2.

The acidic gas absorption unit 1 introduces a gas to be treated 101 containing an acidic gas such as an exhaust gas or air from a line L1, brings the gas to be treated into contact with an acidic gas absorbent (hereinafter, may be referred to as an absorbent) containing an alkaline substance introduced from a line L4, allows at least a part of the acidic gas to be absorbed in the acidic gas absorbent, discharges a rich acidic gas absorbent 110 (hereinafter, may be referred to as a rich absorbent) having absorbed the acidic gas from a line L3, and discharges a treated exhaust gas 102 from which the acidic gas has been removed from a line L2.

The regeneration unit 2 transfers an anion derived from the acidic gas contained in the rich acidic gas absorbent 110 to an acidic gas recovery liquid to remove the acidic gas from the acidic gas absorbent, and regenerates the acidic gas recovery liquid as a lean acidic gas absorbent 111 (hereinafter, may be referred to as a lean absorbent).

In this acidic gas recovery apparatus, the absorbent that absorbs CO₂ in the gas to be treated (the exhaust gas) 101 containing CO₂ circulates between the absorption unit 1 and the regeneration unit 2 (hereinafter, referred to as "in system"). The absorbent (rich absorbent) 110 that has absorbed CO₂ in the exhaust gas 101 is supplied from the absorption unit 1 to the regeneration unit 2 via the line L3. From the regeneration unit 2 to the absorption unit 1, the absorbent (lean absorbent) 111 regenerated by removing part or almost all of CO₂ in the regeneration unit 2 from the rich absorbent 110 is supplied via the line L4.

In the embodiment, the absorbent contains the alkaline substance. As the alkaline substance, in addition to organic compounds such as amino acid salts and amine compounds, inorganic compounds such as alkali metal hydroxides and alkaline earth metal hydroxides can be used.

The alkaline substance is preferably a salt of a metal ion and an acid, and the acid is preferably an amino acid salt using an amino acid. In the present embodiment, the acid has an acidic group such as a carboxyl group, and may also contain a basic group.

The amino acid salt is a salt formed from an amino acid and a metal ion such as an alkali metal.

Examples of the amino acid include alanine, arginine, asparagine, cysteine, glutamine, glycine, histidine, hydroxyproline, isoleucine, leucine, lysine, methionine, phenylalanine, proline, serine, threonine, tryptophan, tyrosine, valine, aspartic acid, and glutamic acid.

The alkali metal is any alkali metal such as lithium, sodium, potassium, rubidium, and cesium, but in the embodiments of the present invention, sodium and potassium are particularly preferable in that a molecular weight of the amino acid salt is not too large.

Examples of the amino acid salt include any combination of alanine sodium salt, alanine potassium salt, glycine sodium salt, glycine potassium salt, and proline rubidium salt.

Specific examples of the amine-based compound include primary amines such as monoethanolamine and 2-amino-2-methyl-1-propanol, secondary amines such as diethanolamine and 2-methylaminoethanol, tertiary amines such as triethanolamine and N-methyldiethanolamine, polyethylene polyamines such as ethylenediamine, triethylenediamine, and diethylenetriamine, cyclic amines such as piperazines, piperidines, and pyrrolidines, polyamines such as xylylenediamine, and amino acids such as methylaminocarboxylic acid. These can be used alone or in combination of two or more. In the embodiment, the absorbent is preferably an aqueous solution of these.

Specific examples of the inorganic compounds include aqueous solutions of alkali metal hydroxides such as lithium hydroxide, sodium hydroxide, and potassium hydroxide, and alkaline earth metal hydroxides such as magnesium hydroxide and calcium hydroxide. These can be used alone or in combination of two or more. In the embodiment, the absorbent is preferably an aqueous solution of these. Sodium hydroxide and potassium hydroxide are particularly preferable because of their high solubility in water.

These can be used alone or in combination of two or more. In the embodiment, the aqueous solution of these is suitable as the absorbent, and even when the amino acid salt leaks as an acidic gas absorption component, additional replenishment is not required, and the acidic gas can be easily recovered from the exhaust gas or the air with continuous operation, and thus it is most preferable as the absorbent. In addition, the absorbent is preferable as an absorbent because a vapor pressure at the time of leakage of the absorption component is small, diffusion into the gas to be treated after acidic gas absorption treatment is small, and discharge to an outside of the system is small.

The absorbent is usually used as an aqueous solution containing 5 to 50 wt% of these alkaline substances.

In a general acidic gas recovery apparatus, the absorbent is often regenerated by heating, and an amine compound from which the acidic gas is easily separated by heating is often used as the absorbent. In the present embodiment, since heating is not used for regeneration of the absorbent, it is preferable to use the amino acid salt which is more likely to absorb the acidic gas than the amine compound as the alkaline substance. The amine compound may diffuse out of the system during operation of the acidic gas recovery apparatus to pollute the air and the like, but when the inorganic compound or the amino acid salt is used as the alkaline substance, such a problem does not occur, which is preferable. In the present embodiment, the acidic gas absorbent is regenerated by electrodialysis as described later, but it is preferable not to regenerate the acidic gas absorbent by any other method.

In addition, the absorbent can appropriately contain other compounds such as a reaction accelerator, a nitrogen-containing compound that improves absorption performance of the acidic gas such as CO₂, an anticorrosive agent for preventing corrosion of plant equipment, an antifoaming agent for preventing foaming, an antioxidant for preventing deterioration of the absorbent, and a pH adjuster in an arbitrary ratio as long as effects of the absorbent is not impaired.

The gas to be treated 101 is a gas containing an acidic gas such as CO₂, and is, for example, a combustion exhaust gas discharged from a boiler, a gas turbine, or the like of a thermal power plant or the like, a process exhaust gas generated in a steel plant, or the like. Such an exhaust gas is preferably boosted by a blower or the like, cooled by a cooler, and then can be supplied from a lower portion of the absorption unit 1 into the absorption unit through a flue.

As the gas to be treated 101, the air containing CO₂ can be used. Since CO₂ concentration contained in the atmospheric is relatively low, energy used by the regeneration unit is also relatively small, and thus, in the present embodiment, it is preferable to use the air as the gas to be treated.

Here, the CO₂ absorption unit 1 has, for example, a shape of a tower, and a filler is formed inside the tower, so that gas-liquid contact efficiency can be improved. A liquid disperser can be provided above the CO₂ absorption unit 1, and the lean absorbent 111 supplied to the absorption unit 1 is dispersed and dropped toward the CO₂ absorption unit by the liquid disperser. The gas to be treated 101 supplied into the absorption unit 1 flows from the lower portion of the absorption unit 1 toward a tower summit (an upper portion) side. In the CO₂ absorption unit 1, when the exhaust gas 101 rising in the absorption unit comes into counter flow contact with the lean absorbent 111, for example, in a case where the absorbent is an amine, a reaction as in the following formula (1) occurs, and CO₂ in the exhaust gas 101 is absorbed by the lean absorbent 111 and removed from the exhaust gas 101.

A shape of the absorption unit 1 may not be a tower in which the filler is installed, and for example, the absorbent may be supplied by spraying or the absorbent may be passed through a flat honeycomb.

The lean absorbent 111 absorbs CO₂ in the exhaust gas 101 by a reaction represented by the formula (1) as an example to be the rich absorbent 110 and is stored in the lower portion.

R₃N+CO₂+H₂O→R₃NH₂CO₃ (1)

Here, R's each independently represent hydrogen, a substituted or unsubstituted alkyl group (which may form a heterocyclic ring).

The treated exhaust gas 102 is discharged to an outside from the upper portion of the absorption unit 1.

The CO₂-removed exhaust gas having passed through the CO₂ absorption unit 1 can be further supplied to a gas cleaning unit (not illustrated) to remove an accompanying absorbent component. The CO₂-removed exhaust gas is cleaned by the gas cleaning unit, and then discharged to the outside from the upper portion of the absorption unit 1 as the treated exhaust gas 102.

On the other hand, the rich absorbent 110 stored in the lower portion of the absorption unit 1 is discharged from the lower portion of the absorption unit 1, passes through the rich absorbent supply line L3, and is supplied to the regeneration unit 2.

The regeneration unit 2 releases CO₂ from the rich absorbent 110 to regenerate the rich absorbent 110 as the lean absorbent 111. When the rich absorbent 110 is supplied into the regeneration unit 2 and a voltage is applied, CO₂ contained in the rich absorbent 110 is desorbed, and the rich absorbent 110 becomes the lean absorbent 111 from which a part of or almost all CO₂ contained in the rich absorbent 110 is removed.

The lean absorbent 111 discharged from the regeneration unit 2 is supplied to the absorption unit 1 again through the line L4. The lean absorbent 111 can also be cooled to improve CO₂ recovery rate from the gas to be treated 101.

The CO₂ gas dissolved in the rich absorbent 110 is transferred to an acidic gas recovery liquid 112 (hereinafter, may be referred to as a lean recovery liquid) for recovering the CO₂ gas in the regeneration unit 2, and an acidic gas recovery liquid into which the CO₂ gas is introduced (hereinafter, may be referred to as a rich recovery liquid) is discharged from the regeneration unit 2. That is, in the regeneration unit 2, an anion derived from the CO₂ gas, which is an anion derived from the acidic gas, contained in the rich absorbent 110 moves to the lean recovery liquid, and the CO₂ gas is dissolved in the generated rich recovery liquid and discharged from the regeneration unit 2.

A rich recovery liquid 113 is supplied to a gas-liquid separator 3 through a line L6, separated into a CO₂ gas 103 and the acidic gas recovery liquid 112 in the gas-liquid separator 3, and the CO₂ gas 103 is recovered through a line L7. In addition, the lean recovery liquid 112 from which the CO₂ gas has been separated is extracted from the lower portion of the gas-liquid separator 3 and supplied to the regeneration unit 2 again through a line L5.

In the regeneration unit 2, a part of a CO₂ gas recovery component contained in the rich absorbent 110 leaks into the acidic gas recovery liquid 112. Therefore, a part 120 of the lean recovery liquid discharged from the gas-liquid separator 3 is mixed with the lean absorbent 111 through the line L4, and CO₂ gas absorption performance of the acidic gas absorbent can be recovered and supplied to the absorption unit 1.

The acidic gas recovery liquid contains an acidic substance. Here, the acidic substance is the same as an acid constituting the alkaline substance.

When an amino acid salt is used as the acidic gas absorbent, the same amino acid constituting the amino acid salt is preferably included, and examples of the amino acid include alanine, arginine, asparagine, cysteine, glutamine, glycine, histidine, hydroxyproline, isoleucine, leucine, lysine, methionine, phenylalanine, proline, serine, threonine, tryptophan, tyrosine, valine, aspartic acid, and glutamic acid.

In addition, an amino acid concentration in the acidic gas recovery liquid depends on solubility of the amino acid, but is preferably 5 to 50 wt%, and the amino acid concentration in the acidic gas recovery liquid is preferably equal to or greater than the amino acid concentration constituting the amino acid salt in the acidic gas absorbent. This is preferable because when the acidic gas absorbent and the acidic gas recovery liquid are mixed, concentration of components in the acidic gas absorbent does not decrease.

Further, the acidic gas recovery liquid may contain not only the amino acid but also aqueous solutions of acids such as sulfuric acid and nitric acid, as well as other salts such as sodium sulfate. As the acidic gas recovery liquid is more acidic, the CO₂ gas is less likely to be dissolved as the anion in the acidic gas recovery liquid, and is more likely to be separated as CO₂ gas by the gas-liquid separator 3. However, it is preferable that the acidic gas recovery liquid contains only the components contained in the acidic gas absorbent, because the components in the acidic gas absorbent do not change when the acidic gas absorbent and the acidic gas recovery liquid are mixed.

When the acidic gas recovery liquid is mixed with the acidic gas absorbent, since an amount of the acidic gas recovery liquid retained is reduced, it is preferable to appropriately additionally supply water to the acidic gas recovery liquid according to the amount of the acidic gas recovery liquid retained. In the absorption unit 1, in particular, when the acidic gas is recovered from the air, since a partial pressure of water vapor in the air is not saturated depending on weather, when the air is treated, moisture in the acidic gas absorbent is discharged from the line L2 together with the treated exhaust gas 102, and water in the acidic gas absorbent decreases. Additionally supplying water is preferable because it can also serve as an additional supply for the water decreased.

In addition, when the acidic gas recovery liquid is mixed with the acidic gas absorbent and used, since the amount of the acidic gas recovery liquid retained is reduced, the rich absorbent 110 may be additionally supplied to the acidic gas recovery liquid as appropriate according to the amount of the acidic gas recovery liquid retained. Since the rich absorbent 110 contains a large amount of CO₂ gas, effect on efficiency of separation into the CO₂ gas 103 and the acidic gas recovery liquid 112 in the gas-liquid separator 3 is small, which is preferable.

According to the present embodiment, it is possible to provide an acidic gas recovery apparatus and a method for recovering the acidic gas from the exhaust gas or the air that can be easily continuously operated without requiring replenishment of the acidic gas absorption component even when the concentration of the acidic gas absorbent decreases due to leakage of the acidic gas absorption component in an acidic gas absorbent.

### [First regeneration unit]

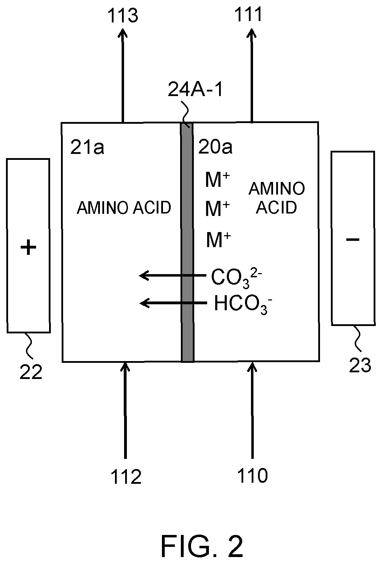

A form of a first regeneration unit in an acid component removing apparatus according to the embodiment will be further described with reference to FIGS. 1 and 2, taking as an example a case where a glycine potassium salt aqueous solution is used as the acidic gas absorbent and a glycine aqueous solution is used as the acidic gas recovery liquid.

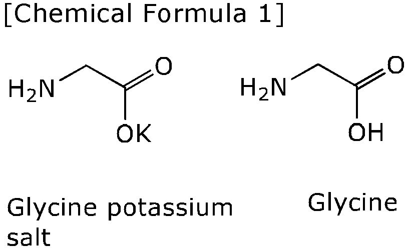

The regeneration unit illustrated in FIG. 2 has an electrodialysis structure including two compartments in which an acidic gas recovery liquid compartment 21a, an anion exchange membrane 24A-1, and an acidic gas absorbent compartment 20a are arranged in this order between an anode 22 and a cathode 23. The regeneration unit transfers the anion derived from the dissolved CO₂ gas, for example, CO₃²⁻ or HCO₃⁻, as the anion derived from the acidic gas from the rich absorbent 110 to the lean recovery liquid through the anion exchange membrane. Therefore, the acidic gas recovery liquid compartment 21a is an acidic gas recovery liquid compartment for recovering the acidic gas, and the acidic gas absorbent compartment 20a is an acidic gas separation compartment for separating the acidic gas.

The cathode 23 and the anode 22 may be immersed in an electrode liquid, and an electrode membrane (not illustrated) separating the cathode 23 and the acidic gas absorbent compartment 20a, and an electrode membrane (not illustrated) separating the anode 22 and the acidic gas recovery liquid compartment 21a can be installed.

In the present embodiment, one acidic gas recovery liquid compartment 21a and one acidic gas absorbent compartment 20a are formed, but one or more sets of the acidic gas recovery liquid compartment and the acidic gas absorbent compartment only need to be formed, and a plurality of sets of the acidic gas recovery liquid compartment and the acidic gas absorbent compartment may be formed. In addition, the number of acidic gas recovery liquid compartments and the number of acidic gas absorbent compartments may not be the same. As long as one or more sets of the acidic gas recovery liquid compartment and the acidic gas absorbent compartment are formed, there may be the acidic gas recovery liquid compartment or the acidic gas absorbent compartment as a single compartment. Therefore, not only a three-compartment configuration or a four-compartment configuration as described later but also a configuration having five or more compartments can be adopted.

As the anion exchange membrane 24A-1, a polymer membrane having an anion exchange group capable of passing the anion and blocking passage of a cation is used. As the anion exchange membrane, for example, a membrane made of a polymer having a weak basic functional group such as a primary amino group, a secondary amino group, or a tertiary amino group in addition to a strong basic group of a quaternary ammonium group can be used. Specifically, known anion exchange membranes such as NEOSEPTA AMX and NEOSEPTA AHA (trade names, manufactured by ASTOM Corporation), SELEMION AMV, SELEMION AMT, SELEMION DSV, SELEMION ASV, and SELEMION AHO (trade names, manufactured by AGC Engineering Co., Ltd.) can be used.

The acidic gas recovery liquid 112 is supplied to the acidic gas recovery liquid compartment 21a. The rich absorbent 110 is supplied to the acidic gas absorbent compartment 20a.

As the rich absorbent 110, one supplied from the absorption unit 1 is used. When the rich absorbent is supplied to the regeneration unit 2 and the voltage is applied to both electrodes, in the acidic gas absorbent compartment 20a, acidic gas components (HCO₃⁻ and CO₃²⁻) contained in the rich absorbent 110 to be treated are anions and are therefore attracted toward the anode 22. Thus, since the acidic gas components (HCO₃⁻ and CO₃²⁻) in the acidic gas absorbent compartment 20a move from the acidic gas absorbent compartment 20a to the acidic gas recovery liquid compartment 21a through the anion exchange membrane 24A-1, the anions (HCO₃⁻ and CO₃²⁻) derived from the acidic gas are removed from the rich absorbent 110, the anions move to the lean recovery liquid 112, and the rich recovery liquid 113 containing the anions is discharged. At this time, the voltage can be applied to the both electrodes by renewable energy supplied from a renewable energy supply source 10.

On the other hand, since a glycine potassium ion is a cation, it cannot pass through the anion exchange membrane 24A-1, but leakage of glycine into the lean recovery liquid 112 occurs due to a pressure difference between the acidic gas recovery liquid compartment 21a and the acidic gas absorbent compartment 20a and a glycine component present in the acidic gas absorbent compartment 20a without cationization.

The lean recovery liquid has a glycine concentration equal to or greater than a concentration of the glycine constituting glycine potassium in the acidic gas absorbent.

Glycine potassium is alkaline, while the glycine is more acidic and near neutral. Therefore, even when the glycine is present at a high concentration in the acidic gas recovery liquid, the acidic gas recovery liquid is not alkaline, and the CO₂ gas can be separated in the gas-liquid separator 3. When the glycine potassium is contained in the acidic gas recovery liquid instead of the glycine, since the acidic gas recovery liquid is alkaline, the acidic gas components (HCO₃⁻ and CO₃²⁻) having moved from the rich absorbent 110 are held as the anions even in the acidic gas recovery liquid, and the CO₂ gas cannot be separated in the gas-liquid separator 3.

In the rich recovery liquid 113, a component that cannot be dissolved as an anion among the acidic gas components (HCO₃⁻ and CO₃²⁻) may be mixed therein as CO₂ that is not in an ionic state.

The rich recovery liquid 113 is separated into the CO₂ gas 103 and the acidic gas recovery liquids 112 and 120 in the gas-liquid separator 3, and the CO₂ gas 103 is recovered.

In addition, the lean absorbent 111, which is obtained by removing the anions derived from the acidic gas from the rich absorbent 110, is also discharged.

The acidic gas recovery liquid 120 in which the glycine leaked from the rich absorbent 110 is increased passes through a line L20 and is mixed with the lean absorbent 111, thereby returning the glycine leaked from the rich absorbent 110 to the lean absorbent 111 and keeping a glycine potassium salt concentration constant.

Required amounts of the acidic gas absorbent and the acidic gas recovery liquid to be operated in the acidic gas recovery apparatus are small because the amount of the acidic gas recovery liquid only needs to be large enough to be circulated through the regeneration unit 2 with respect to the acidic gas absorbent that treats the gas to be treated 101 containing a large amount of acidic gas.

Therefore, by setting the glycine concentration in the acidic gas recovery liquid to be equal to or greater than the concentration of the glycine constituting glycine potassium in the acidic gas absorbent, the glycine concentration of the acidic gas recovery liquid in which the glycine leaked from the acidic gas absorbent is increased is greater than that of the acidic gas absorbent in which the glycine concentration is decreased, and the acidic gas absorbent can be maintained at a predetermined concentration only by supplying a part of the acidic gas recovery liquid in which the glycine concentration is increased to the acidic gas absorbent in which the glycine concentration is decreased.

Mixing of the acidic gas recovery liquid 120 with the lean absorbent 111 may be performed not continuously but intermittently, and the line L20 may be closed to circulate the acidic gas recovery liquid only by the line L5 to increase the glycine concentration in the acidic gas recovery liquid, and then the line L20 may be opened to mix the acidic gas recovery liquid 120 and the lean absorbent 111.

The lean absorbent 111 discharged from the regeneration unit 2 may be supplied in its entirety to the absorption unit 1 as illustrated in FIG. 1, however, in a case where removal of CO₂ is not sufficient, the lean absorbent 111 may be repeatedly circulated through the regeneration unit 2 again to produce the lean absorbent 111 in which CO₂ is sufficiently small, and then may be supplied to the absorption unit 1. This is more preferable because acidic gas recovery rate in the absorption unit 1 is improved.

### [Second acidic gas recovery apparatus]

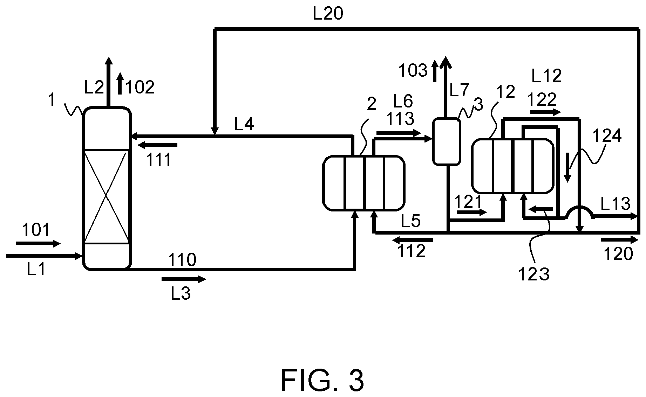

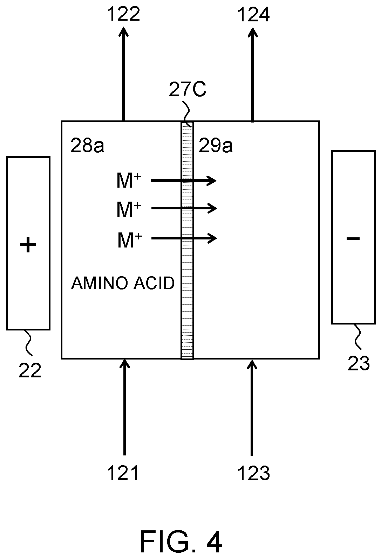

Further, a secondary regeneration unit 12 that recovers a cation derived from the alkaline substance contained in the rich recovery liquid 113 discharged from the regeneration unit into a cation recovery liquid may be provided. Details thereof will be described with reference to FIGS. 3 and 4.

Not only the glycine but also a potassium ion may leak from the rich absorbent 110 and may be contained in the rich recovery liquid 113. When the potassium ion is present in the acidic gas recovery liquid, the acidic gas recovery liquid is alkaline, and the efficiency of separation into the CO₂ gas 103 and the acidic gas recovery liquid 112 in the gas-liquid separator 3 decreases.

Therefore, it is more preferable to include the secondary regeneration unit that separates the potassium ion, which is the cation derived from the alkaline substance contained in the rich recovery liquid 113, and recovers the potassium ion into the cation recovery liquid.

The secondary regeneration unit 12 illustrated in FIG. 4 has an electrodialysis structure including two compartments in which an acidic gas recovery liquid compartment 28a, a cation exchange membrane 27C, and a cation recovery liquid compartment 29a are arranged in this order between the anode 22 and the cathode 23. The secondary regeneration unit transfers the potassium ion as the cation from a lean recovery liquid 121 to a cation recovery liquid 123 through the cation exchange membrane. Therefore, the acidic gas recovery liquid compartment 28a is an absorbent component separation compartment in which the cation dissolved in the absorbent is separated, and the cation recovery liquid compartment 29a recovers the cation.

As the cation exchange membrane 27C, a polymer membrane having a cation exchange group capable of passing the cation and blocking passage of the anion is used. As the cation exchange membrane 27C, for example, a membrane made of a polymer having one or more sulfonic acid groups, carboxylic acid groups, phosphonic acid groups, sulfuric acid ester groups, and phosphoric acid ester groups can be used. Specifically, known cation exchange membranes such as NEOSEPTA CMX and NEOSEPTA CMB (trade names, manufactured by ASTOM Corporation), SELEMION CMV, SELEMION CMD, SELEMION CSO, and SELEMION CMF (trade names, manufactured by AGC Engineering Co., Ltd.) can be used.

When the lean recovery liquid 121 is supplied to the secondary regeneration unit 12 and the voltage is applied between the both electrodes, in the acidic gas recovery liquid compartment 28a, the potassium ion which is the cation (M⁺) derived from the alkaline substance contained in the lean recovery liquid 121 is the cation and is therefore attracted toward the cathode 23. Thus, since the cation in the acidic gas recovery liquid compartment 28a moves from the acidic gas recovery liquid compartment 28a to the cation recovery liquid compartment 29a through the cation exchange membrane 27C, the potassium ion as the absorbent component (M⁺) is removed from the lean recovery liquid 121, a specific component moves to the cation recovery liquid 123, and a cation recovery liquid 124 containing the specific component is discharged. On the other hand, a lean recovery liquid 122 in which the specific component is removed from the lean recovery liquid 121 is also discharged.

The lean recovery liquid 122 is mixed with the lean absorbent 111 through the line L20, so that the glycine leaked from the rich absorbent 110 can be returned to the lean absorbent 111 and the glycine potassium salt concentration can be kept constant. The lean recovery liquid 122 may be supplied to the regeneration unit 2 again through the line L5.

The cation recovery liquid 124 is mixed with the lean absorbent 111 through the line L20, so that the glycine and potassium leaked from the rich absorbent 110 can be returned to the lean absorbent 111 and the glycine potassium salt concentration can be kept constant. The cation recovery liquid 124 may be supplied to the secondary regeneration unit 12 again as the cation recovery liquid 123.

### [Third acidic gas recovery apparatus]

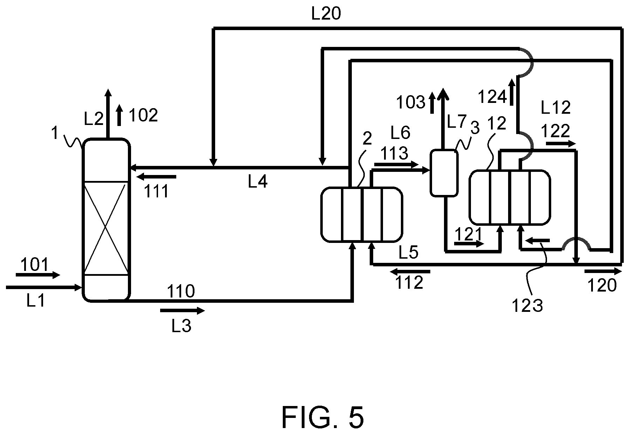

As illustrated in FIG. 5, a lean acidic gas absorbent 123 may be used as the cation recovery liquid to be supplied to the secondary regeneration unit 12. In this way, a new cation recovery liquid is unnecessary, and the potassium ion leaked out can be directly returned to the acidic gas absorbent. It is preferable to extract at least a part of the cation recovery liquid 123 from the lean absorbent 111 discharged from the regeneration unit. In addition, position of a line for returning the cation recovery liquid 124 treated in the secondary regeneration unit 12 to the acidic gas absorbent may be anywhere, but is more preferably downstream of a line from which the cation recovery liquid 123 is extracted.

### [Second regeneration unit]

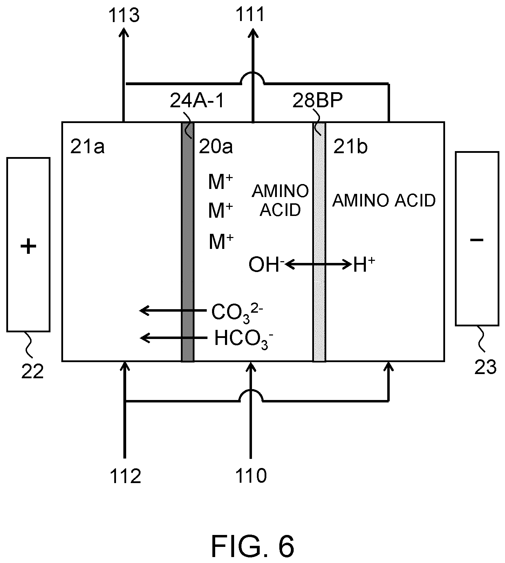

Another form of the regeneration unit 2 that can be used in the acidic gas recovery apparatus according to the embodiment will be described with reference to FIGS. 6 and 1.

The regeneration unit shown in FIG. 6 has an electrodialysis structure including a three-compartment structure in which a first acidic gas recovery liquid compartment 21a, a first anion exchange membrane 24A-1, an acidic gas absorbent compartment 20a, a bipolar membrane 28BP, and a second acidic gas recovery liquid compartment 21b are arranged in this order between the anode 22 and the cathode 23. The regeneration unit transfers the anion derived from the dissolved CO₂ gas from the rich absorbent 110 to the lean recovery liquid through the anion exchange membrane.

Then, the first acidic gas recovery liquid compartment and the second acidic gas recovery liquid compartment are acidic gas recovery liquid compartments for recovering the acidic gas, and the acidic gas absorbent compartment is the acidic gas separation compartment in which the acidic gas is separated.

As the anion exchange membrane 24A-1, a membrane similar to the anion exchange membrane mentioned in the first regeneration unit can be used.

The bipolar membrane 28BP is a composite membrane in which the anion exchange membrane and the cation exchange membrane are laminated, and is disposed such that the anion exchange membrane is on the anode side and the cation exchange membrane is on the cathode side. When a voltage equal to or higher than a theoretical decomposition voltage of water is applied in the presence of water, water can be electrolyzed into hydrogen ions and hydroxide ions. Specifically, a known bipolar membrane such as NEOSEPTA BP-1E (trade name, manufactured by ASTOM Corporation) can be used.

The lean recovery liquid 112 is supplied to the first acidic gas recovery liquid compartment 21a and the second acidic gas recovery liquid compartment 21b. The rich absorbent 110 is supplied to the acidic gas absorbent compartment 20a. By applying a voltage between both electrodes, the absorbent can be regenerated by the same function as that of the first regeneration unit, but in combination with the bipolar membrane, a large number of compartments can be formed, an amount of the absorbent that can be treated increases, and the CO₂ gas recovery amount can also be increased, which is preferable.

### [Third regeneration unit]

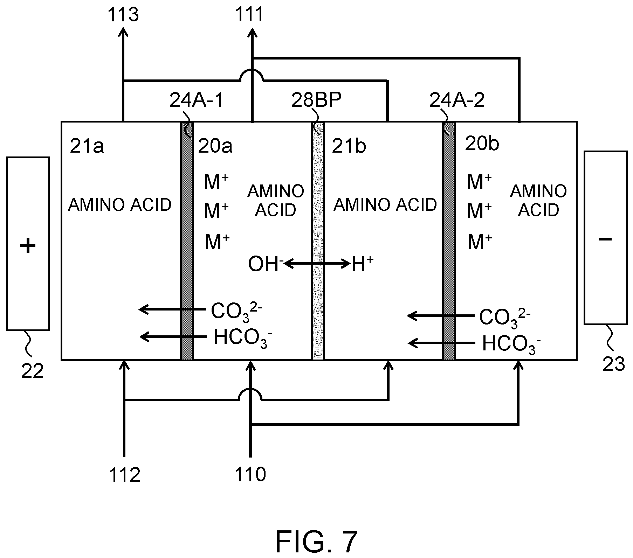

Another form of the regeneration unit 2 that can be used in the acidic gas recovery apparatus according to the embodiment will be described with reference to FIGS. 7 and 1.

The regeneration unit illustrated in FIG. 7 has an electrodialysis structure having a four-compartment structure in which a first acidic gas recovery liquid compartment 21a, a first anion exchange membrane 24A-1, a first acidic gas absorbent compartment 20a, a bipolar membrane 28BP, a second acidic gas recovery liquid compartment 21b, a second anion exchange membrane 24A-2, and a second acidic gas absorbent compartment 20b are arranged in this order between the anode 22 and the cathode 23. The regeneration unit transfers the anion derived from the dissolved CO₂ gas from the rich absorbent 110 to the lean recovery liquid through the anion exchange membrane.

Then, the first acidic gas recovery liquid compartment and the second acidic gas recovery liquid compartment are acidic gas recovery liquid compartments for recovering the acidic gas, and the first acidic gas absorbent compartment and the second acidic gas absorbent compartment are compartments in which the acidic gas is separated.

As the anion exchange membranes 24A-1 and 24A-2, membranes similar to the anion exchange membranes mentioned in the first regeneration unit can be used. Further, as the bipolar membrane 28BP, a membrane similar to the bipolar membrane mentioned in the second regeneration unit can be used.

The lean recovery liquid 112 is supplied to the first acidic gas recovery liquid compartment 21a and the second acidic gas recovery liquid compartment 21b. The rich absorbent 110 is supplied to the first acidic gas absorbent compartment 20a and the second acidic gas absorbent compartment 20b. By applying a voltage between both electrodes, the absorbent can be regenerated by the same function as that of the first regeneration unit, but in combination with the bipolar membrane, a large number of compartments can be formed, the amount of the absorbent that can be treated increases, and the CO₂ gas recovery amount can also be increased, which is preferable.

### [Fourth regeneration unit]

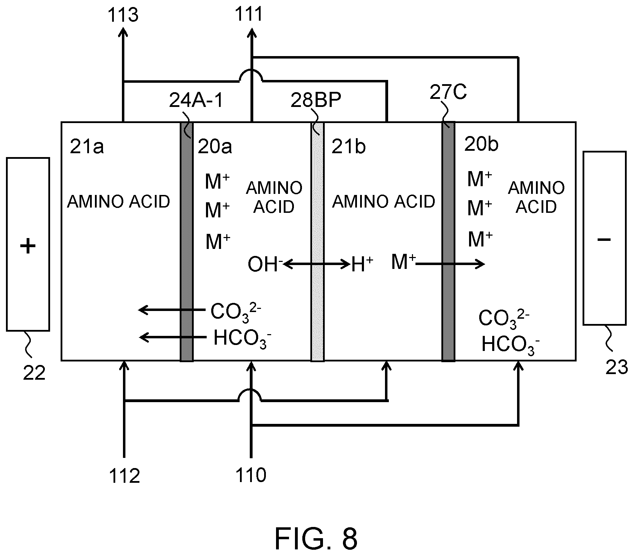

Another form of the regeneration unit 2 that can be used in the acidic gas recovery apparatus according to the embodiment will be described with reference to FIGS. 8 and 1.

Not only the glycine but also the potassium ion may leak from the rich absorbent 110 and may be contained in the rich recovery liquid 113. When the potassium ion is present in the acidic gas recovery liquid, the acidic gas recovery liquid is alkaline, and the efficiency of separation into the CO₂ gas 103 and the acidic gas recovery liquid 112 in the gas-liquid separator 3 decreases. Therefore, a mechanism for separating the potassium ion, which is the cation derived from the alkaline substance contained in the acidic gas recovery liquid, and returning the potassium ion to the acidic gas absorbent is provided.

The regeneration unit shown in FIG. 8 has an electrodialysis structure having a four-compartment structure in which a first acidic gas recovery liquid compartment 21a, a first anion exchange membrane 24A-1, a first acidic gas absorbent compartment 20a, a bipolar membrane 28BP, a second acidic gas recovery liquid compartment 21b, a first cation exchange membrane 27C, and a second acidic gas absorbent compartment 20b are arranged in this order between the anode 22 and the cathode 23.

In the regeneration unit, the first acidic gas recovery liquid compartment 21a and the first acidic gas absorbent compartment 20a transfer the anion derived from the dissolved CO₂ gas from the rich absorbent 110 to the lean recovery liquid through the anion exchange membrane. The first acidic gas recovery liquid compartment 21a is an acidic gas recovery liquid compartment for recovering the acidic gas, and the first acidic gas absorbent compartment 20a is the acidic gas separation compartment in which the acidic gas is separated.

In the regeneration unit, the second acidic gas recovery liquid compartment 21b and the second acidic gas absorbent compartment 20b transfer the cation derived from the dissolved potassium ion from the recovery liquid to the acidic gas absorbent through the cation exchange membrane as the cation derived from the alkaline substance. The second acidic gas recovery liquid compartment 21b is a potassium ion separation compartment for separating the potassium ion present in the acidic gas recovery liquid, and the second acidic gas absorbent compartment 20b is a potassium ion recovery compartment for recovering the potassium ion into the acidic gas absorbent.

As the anion exchange membrane 24A-1, a membrane similar to the anion exchange membrane mentioned in the first regeneration unit can be used. As the cation exchange membrane 27C, a membrane similar to the cation exchange membrane mentioned in the secondary regeneration unit can be used. Further, as the bipolar membrane 28BP, a membrane similar to the bipolar membrane mentioned in the second regeneration unit can be used.

The lean recovery liquid 112 is supplied to the first acidic gas recovery liquid compartment 21a and the second acidic gas recovery liquid compartment 21b. The rich absorbent 110 is supplied to the first acidic gas absorbent compartment 20a and the second acidic gas absorbent compartment 20b. By applying the voltage between the both electrodes, the absorbent can be regenerated by the same function as that of the first regeneration unit, and further the potassium ion leaked in the acidic gas recovery liquid can also be recovered, and in combination with the bipolar membrane, a large number of compartments can be formed, the amount of the absorbent that can be treated increases, and the CO₂ gas recovery amount can also be increased, which is preferable.

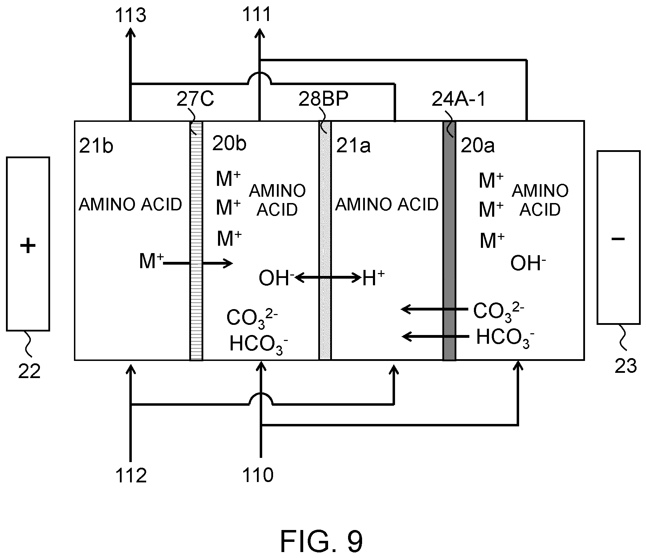

The regeneration unit illustrated in FIG. 9 is another form of the regeneration unit illustrated in FIG. 8, and has an electrodialysis structure having a four-compartment structure in which a second acidic gas recovery liquid compartment 21b, a first cation exchange membrane 27C, a second acidic gas absorbent compartment 20b, a bipolar membrane 28BP, a first acidic gas recovery liquid compartment 21a, a first anion exchange membrane 24A-1, and a first acidic gas absorbent compartment 20a are arranged in this order.

In the regeneration unit, the first acidic gas recovery liquid compartment 21a and the first acidic gas absorbent compartment 20a transfer the anion derived from the dissolved CO₂ gas from the rich absorbent 110 to the lean recovery liquid through the anion exchange membrane. The first acidic gas recovery liquid compartment 21a is an acidic gas recovery liquid compartment for recovering the acidic gas, and the first acidic gas absorbent compartment 20a is the acidic gas separation compartment in which the acidic gas is separated.

In the regeneration unit, the second acidic gas recovery liquid compartment 21b and the second acidic gas absorbent compartment 20b transfer the cation derived from the dissolved potassium ion from the recovery liquid to the acidic gas absorbent through the cation exchange membrane as the cation derived from the alkaline substance. The second acidic gas recovery liquid compartment 21b is a potassium ion separation compartment for separating the potassium ion present in the acidic gas recovery liquid, and the second acidic gas absorbent compartment 20b is a potassium ion recovery compartment for recovering the potassium ion into the acidic gas absorbent.

As the anion exchange membrane 24A-1, a membrane similar to the anion exchange membrane mentioned in the first regeneration unit can be used. As the cation exchange membrane 27C, a membrane similar to the cation exchange membrane mentioned in the secondary regeneration unit can be used. Further, as the bipolar membrane 28BP, a membrane similar to the bipolar membrane mentioned in the second regeneration unit can be used.

The lean recovery liquid 112 is supplied to the first acidic gas recovery liquid compartment 21a and the second acidic gas recovery liquid compartment 21b. The rich absorbent 110 is supplied to the first acidic gas absorbent compartment 20a and the second acidic gas absorbent compartment 20b. By applying the voltage between the both electrodes, the absorbent can be regenerated by the same function as that of the first regeneration unit, and further the potassium ion leaked in the acidic gas recovery liquid can also be recovered, and in combination with the bipolar membrane, a large number of compartments can be formed, the amount of the absorbent that can be treated increases, and the CO₂ gas recovery amount can also be increased, which is preferable.

### [Fourth acidic gas recovery apparatus]

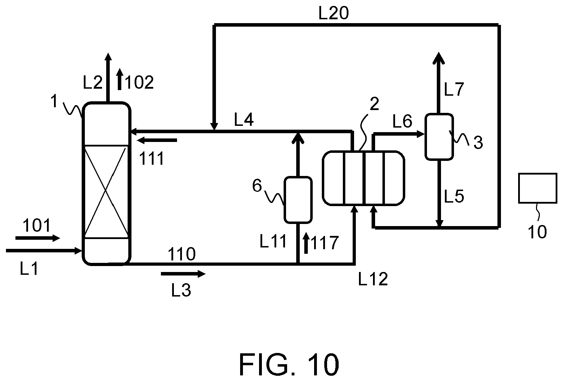

FIG. 10 is a configuration of the acidic gas recovery apparatus according to another embodiment. The configuration of this apparatus is different from an aspect of a first acidic gas recovery apparatus described above in that a bypass line L11 that does not pass through the regeneration unit 2 is provided in a path through which the acidic gas recovery liquid circulates. This embodiment is a schematic diagram illustrating an aspect in which when electric power required to operate the regeneration unit 2 is not supplied from the renewable energy supply source 10, the absorption unit 1 operates to absorb the acidic gas with the absorbent, and operation of the regeneration unit 2 can be omitted. Although FIG. 10 is based on the first acidic gas recovery apparatus, the bypass line may be combined with another acidic gas recovery apparatus according to the embodiment. At this time, a bypass line through which the absorbent can circulate without passing through the regenerating unit is provided.

As the renewable energy supply source 10, an energy supply source having large weather and seasonal variations such as solar power generation, wind power generation, hydraulic power generation, and wave power generation can be used.

The renewable energy supply source used in the embodiment may supply energy to another demand destination other than the regeneration unit 2, and the regeneration unit 2 is operated when a supply amount of the renewable energy is larger than the electric power supplied to the destination other than the regeneration unit 2, so that the renewable energy can be effectively used without surplus.

In addition, a renewable energy supply source dedicated to the acidic gas recovery apparatus according to the embodiment may be installed. When the air is used as the gas to be treated, it is not necessary to continuously treat the generated gas to be treated like a factory exhaust gas. Therefore, since the gas to be treated can be treated according to power generation capacity of the renewable energy supply source, the gas to be treated is preferably the air.

When the electric power supplied from the renewable energy supply source 10 is not sufficient for the operation of the regeneration unit 2, an absorbent 117 is not supplied to the regeneration unit 2, but is supplied again to the absorption unit 1 through the bypass line L11, and is used to absorb CO₂ gas from the gas to be treated. Therefore, the absorbent circulates through the absorption unit and is repeatedly used to absorb the CO₂ gas.

When the absorbent is repeatedly used without being regenerated, the amount of CO₂ gas absorbed in the absorbent increases. As a result, since CO₂ gas absorption efficiency decreases each time the number of times of use increases, it is preferable to stop operation of the absorption unit when the amount of CO₂ gas absorbed in the absorbent is equal to or more than a certain value. Therefore, for example, a lower limit of the CO₂ recovery rate in the absorption unit 1 is determined in advance, and the operation can be stopped when the recovery rate is equal to or less than the lower limit. Alternatively, an upper limit absorption amount of the CO₂ gas absorption amount in the absorbent may be determined in advance, and the operation may be stopped when the absorption amount is equal to or more than the upper limit absorption amount. In such a case, it is also possible to provide a storage unit 6 as illustrated in FIG. 10 and store the absorbent therein.

This operation is particularly effective under a condition that CO₂ gas recovery performance is still maintained after the absorbent 111 passes through the absorption unit 1 only once, and when the CO₂ gas concentration in the gas to be treated 101 is low, the CO₂ gas absorption amount can be maximized up to a theoretical equilibrium value by repeatedly supplying the absorbent to the absorption unit 1. Therefore, the acidic gas recovery apparatus according to the embodiment is particularly preferable when the gas to be treated 101 is the air.

In addition, since the amount of CO₂ gas that can be absorbed increases as a total amount of the circulating absorbent increases relative to the amount of the gas to be treated, it is preferable that the amount of the absorbent stored in the storage unit 6 is larger.

When the electric power supplied from the renewable energy supply source 10 is sufficient for the operation of the regeneration unit, the stored rich absorbent 110 is supplied to the regeneration unit 2 and regeneration operation is started, so that CO₂ gas recovery treatment can be started again.

In the embodiment in which the absorbent is regenerated by electrodialysis, since the CO₂ gas recovery can be started immediately after the operation is started, a time until activation is short as compared with a regeneration method requiring heating or the like, so that it is possible to easily follow load variation and perform an efficient operation.

Note that the above embodiments can be summarized in the following technical solutions.

### [Technical solution 1]

An acidic gas recovery apparatus including:
an acidic gas absorption unit configured to bring a gas to be treated containing an acidic gas into contact with an acidic gas absorbent containing an alkaline substance, and allow the acidic gas absorbent to absorb at least a part of the acidic gas to discharge a rich acidic gas absorbent that has absorbed the acidic gas and the gas to be treated from which the acidic gas has been removed; and
a regeneration unit configured to regenerate the acidic gas absorbent by transferring an anion derived from the acidic gas contained in the rich acidic gas absorbent to an acidic gas recovery liquid containing an acidic substance, in which
the acidic gas absorption unit and the regeneration unit are connected so that the acidic gas absorbent circulates, and
the regeneration unit includes, between a cathode and an anode facing each other, an acidic gas absorbent compartment, an acidic gas recovery liquid compartment, and a membrane disposed between the acidic gas absorbent compartment and the acidic gas recovery liquid compartment, the membrane being selected from a cation exchange membrane, an anion exchange membrane, or a bipolar membrane, and regenerates the acidic gas absorbent by electrodialysis to transfer and separate the anion derived from the acidic gas from the acidic gas absorbent introduced into the acidic gas absorbent compartment to the acidic gas recovery liquid introduced into the acidic gas recovery liquid compartment.

### [Technical solution 2]

The acidic gas recovery apparatus according to technical solution 1, in which
the alkaline substance is a salt of a metal ion and an acid, and
the acidic substance is the same as the acid.

### [Technical solution 3]

The acidic gas recovery apparatus according to technical solution 1 or 2, in which the alkaline substance in the acidic gas absorbent is an amino acid salt, and the acidic substance contained in the acidic gas recovery liquid is an amino acid.

### [Technical solution 4]

The acidic gas recovery apparatus according to any one of technical solutions 1 to 3, in which a concentration of the acid contained in the alkaline substance in the acidic gas absorbent is 5 to 50 wt%, and a concentration of an acid contained in the acidic substance in the acidic gas recovery liquid is equal to or higher than a concentration of an acid in the acidic gas absorbent.

### [Technical solution 5]

The acidic gas recovery apparatus according to any one of technical solutions 1 to 4, in which a supply line for mixing the acidic gas recovery liquid is connected to a line for supplying the acidic gas absorbent from the regeneration unit to the acidic gas absorption unit.

### [Technical solution 6]

The acidic gas recovery apparatus according to any one of technical solutions 1 to 5, further including a supply line configured to mix water with the acidic gas recovery liquid.

### [Technical solution 7]

The acidic gas recovery apparatus according to any one of technical solutions 1 to 6, further including a supply line configured to mix the rich acidic gas absorbent that has absorbed the acidic gas with the acidic gas recovery liquid.

### [Technical solution 8]

The acidic gas recovery apparatus according to any one of technical solutions 1 to 7, in which the regeneration unit has an electrodialysis structure including two compartments in which the acidic gas recovery liquid compartment, the anion exchange membrane, and the acidic gas absorbent compartment are arranged in this order between the anode and the cathode.

### [Technical solution 9]

The acidic gas recovery apparatus according to technical solution 7, further including a secondary regeneration unit configured to recover a cation derived from the alkaline substance contained in an acidic gas recovery liquid discharged from the regeneration unit into a cation recovery liquid, in which
the secondary regeneration unit has an electrodialysis structure including two compartments in which an acidic gas recovery liquid compartment, a cation exchange membrane, and a cation recovery liquid compartment are arranged in this order between an anode and a cathode.

### [Technical solution 10]

The acidic gas recovery apparatus according to technical solution 9, in which the cation recovery liquid is an acidic gas absorbent discharged from the regeneration unit.

### [Technical solution 11]

The acidic gas recovery apparatus according to any one of technical solutions 1 to 10, in which the regeneration unit has an electrodialysis structure including three compartments in which a first acidic gas recovery liquid compartment, an anion exchange membrane, the acidic gas absorbent compartment, a bipolar membrane, and a second acidic gas recovery liquid compartment are arranged in this order between the anode and the cathode.

### [Technical solution 12]

The acidic gas recovery apparatus according to any one of technical solutions 1 to 10, in which the regeneration unit has an electrodialysis structure including a four-compartment structure in which a first acidic gas recovery liquid compartment, a first anion exchange membrane, a first acidic gas absorbent compartment, a bipolar membrane, a second acidic gas recovery liquid compartment, a second anion exchange membrane, and a second acidic gas absorbent compartment are arranged in this order between the anode and the cathode.

### [Technical solution 13]

The acidic gas recovery apparatus according to any one of technical solutions 1 to 10, in which the regeneration unit has an electrodialysis structure including a four-compartment structure in which a first acidic gas recovery liquid compartment, a first anion exchange membrane, a first acidic gas absorbent compartment, a bipolar membrane, a second acidic gas recovery liquid compartment, a first cation exchange membrane, and a second acidic gas absorbent compartment are arranged in this order between the anode and the cathode.

### [Technical solution 14]

The acidic gas recovery apparatus according to any one of technical solutions 1 to 10, in which the regeneration unit has an electrodialysis structure including a four- compartment structure in which a second acidic gas recovery liquid compartment, a first cation exchange membrane, a second acidic gas absorbent compartment, a bipolar membrane, a first acidic gas recovery liquid compartment, a first anion exchange membrane, and a first acidic gas absorbent compartment are arranged in this order between the anode and the cathode.

### [Technical solution 15]

An acidic gas recovery method including the following steps (a) to (c):
a step (a) of bringing a gas to be treated containing an acidic gas into contact with an acidic gas absorbent containing an alkaline substance to allow the acidic gas absorbent to absorb the acidic gas in the gas to be treated to obtain a rich acidic gas absorbent;
a step (b) of regenerating the acidic gas absorbent by transferring and separating an anion derived from the acidic gas from the rich acidic gas absorbent into an acidic gas recovery liquid containing an acidic substance by electrodialysis, and simultaneously converting the acidic gas recovery liquid into a rich recovery liquid; and
a step (c) of mixing at least a part of the acidic gas recovery liquid in a step of introducing the acidic gas absorbent regenerated in the step (b) into the acidic gas absorbent in the step (a).

### [Technical solution 16]

The acidic gas recovery method according to technical solution 15, in which
the alkaline substance is a salt of a metal ion and an acid, and
the acidic substance is the same as the acid.

### [Technical solution 17]

The acidic gas recovery method according to technical solution 15 or 16, further including a step (d) of removing the acidic gas from the rich recovery liquid and regenerating the acidic gas recovery liquid.

### [Technical solution 18]

The acidic gas recovery method according to technical solution 17, further including a step (e) of mixing the acidic gas recovery liquid regenerated in the step (d) with the acidic gas absorbent in the step (a).

### [Technical solution 19]

The acidic gas recovery method according to any one of technical solutions 15 to 18, which does not include a step of regenerating the acidic gas absorbent not by electrodialysis.

### [Technical solution 20]

The acidic gas recovery method according to any one of technical solutions 15 to 19, in which energy used for the electrodialysis is renewable energy.

### [Technical solution 21]

The acid gas recovery method according to technical solution 20, in which an operation of the step (b) is performed when surplus power is generated from the renewable energy in operation of a renewable energy generation apparatus.

### [Technical solution 22]

The acidic gas recovery method according to technical solution 20, in which an operation of the step (a) is performed but an operation of the step (b) is not performed when the renewable energy is not supplied.

### [Technical solution 23]

The acidic gas recovery method according to any one of technical solutions 15 to 22, in which in the step (a), when the acid gas content in the rich acidic gas absorbent is equal to or less than a set value, an operation of the step (a) is stopped to store the rich acidic gas absorbent.

### [Technical solution 24]

The acidic gas recovery method according to any one of technical solutions 15 to 23, in which the gas to be treated is air.

Although the acidic gas recovery apparatus and the recovery method according to some embodiments of the present invention have been described above, these embodiments are presented as examples and do not limit the scope of the invention. These embodiments can be implemented in various other forms, and various omissions, substitutions, changes, additions, or the like can be made without departing from the gist of the invention. These embodiments and modifications are included in the scope and gist of the invention, and are included in the invention described in claims and the equivalent scope thereof.

### REFERENCE SIGNS LIST

1 Absorption unit
2 Regeneration unit
3 Gas-liquid separator
6 Storage unit
10 Renewable energy supply source
12 Secondary regeneration unit
20a, 20b Acidic gas absorbent compartment
21a, 21b Acidic gas recovery liquid compartment
25a, 25b Acidic gas absorbent compartment
26a, 26b Acidic gas recovery liquid compartment
24A-1, 24A-2Anion exchange membrane
27C-1, 27C-2Cation exchange membrane
28BP Bipolar membrane
110 Rich absorbent
111 Lean absorbent
112 Lean recovery liquid
113 Rich recovery liquid
123, 124 Cation recovery liquid

## Claims

1. An acidic gas recovery apparatus comprising:
an acidic gas absorption unit configured to bring a gas to be treated containing an acidic gas into contact with an acidic gas absorbent containing an alkaline substance, and allow said acidic gas absorbent to absorb at least a part of said acidic gas to discharge a rich acidic gas absorbent that has absorbed said acidic gas and said gas to be treated from which said acidic gas has been removed; and
a regeneration unit configured to regenerate said acidic gas absorbent by transferring an anion derived from said acidic gas contained in the rich acidic gas absorbent to an acidic gas recovery liquid containing an acidic substance, wherein
said acidic gas absorption unit and said regeneration unit are connected so that said acidic gas absorbent circulates, and
said regeneration unit includes, between a cathode and an anode facing each other, an acidic gas absorbent compartment, an acidic gas recovery liquid compartment, and a membrane disposed between said acidic gas absorbent compartment and said acidic gas recovery liquid compartment, said membrane being selected from a cation exchange membrane, an anion exchange membrane, or a bipolar membrane, and regenerates said acidic gas absorbent by electrodialysis to transfer and separate said anion derived from said acidic gas from said acidic gas absorbent introduced into said acidic gas absorbent compartment to said acidic gas recovery liquid introduced into said acidic gas recovery liquid compartment.

2. The acidic gas recovery apparatus according to claim 1, wherein said alkaline substance is a salt of a metal ion and an acid, and said acidic substance is the same as said acid.

3. The acidic gas recovery apparatus according to claim 1 or 2, wherein said alkaline substance in said acidic gas absorbent is an amino acid salt, and said acidic substance contained in said acidic gas recovery liquid is an amino acid.

4. The acidic gas recovery apparatus according to claim 1 or 2, wherein a concentration of said acid contained in said alkaline substance in said acidic gas absorbent is 5 to 50 wt%, and a concentration of an acid contained in said acidic substance in said acidic gas recovery liquid is equal to or higher than a concentration of an acid in said acidic gas absorbent.

5. The acidic gas recovery apparatus according to claim 1 or 2, wherein a supply line for mixing said acidic gas recovery liquid is connected to a line for supplying said acidic gas absorbent from said regeneration unit to said acidic gas absorption unit.

6. The acidic gas recovery apparatus according to claim 1 or 2, further comprising a supply line configured to mix water with said acidic gas recovery liquid.

7. The acidic gas recovery apparatus according to claim 1 or 2, further comprising a supply line configured to mix said rich acidic gas absorbent that has absorbed said acidic gas with said acidic gas recovery liquid.

8. The acidic gas recovery apparatus according to claim 1 or 2, wherein said regeneration unit has an electrodialysis structure including two compartments in which said acidic gas recovery liquid compartment, said anion exchange membrane, and said acidic gas absorbent compartment are arranged in this order between said anode and said cathode.

9. The acidic gas recovery apparatus according to claim 7, further comprising a secondary regeneration unit configured to recover a cation derived from said alkaline substance contained in an acidic gas recovery liquid discharged from said regeneration unit into a cation recovery liquid, wherein
said secondary regeneration unit has an electrodialysis structure including two compartments in which an acidic gas recovery liquid compartment, a cation exchange membrane, and a cation recovery liquid compartment are arranged in this order between an anode and a cathode.

10. The acidic gas recovery apparatus according to claim 9, wherein said cation recovery liquid is an acidic gas absorbent discharged from said regeneration unit.

11. The acidic gas recovery apparatus according to claim 1 or 2, wherein said regeneration unit has an electrodialysis structure including three compartments in which a first acidic gas recovery liquid compartment, an anion exchange membrane, said acidic gas absorbent compartment, a bipolar membrane, and a second acidic gas recovery liquid compartment are arranged in this order between said anode and said cathode.

12. The acidic gas recovery apparatus according to claim 1 or 2, wherein said regeneration unit has an electrodialysis structure including a four-compartment structure in which a first acidic gas recovery liquid compartment, a first anion exchange membrane, a first acidic gas absorbent compartment, a bipolar membrane, a second acidic gas recovery liquid compartment, a second anion exchange membrane, and a second acidic gas absorbent compartment are arranged in this order between said anode and said cathode.

13. The acidic gas recovery apparatus according to claim 1 or 2, wherein said regeneration unit has an electrodialysis structure including a four-compartment structure in which a first acidic gas recovery liquid compartment, a first anion exchange membrane, a first acidic gas absorbent compartment, a bipolar membrane, a second acidic gas recovery liquid compartment, a first cation exchange membrane, and a second acidic gas absorbent compartment are arranged in this order between said anode and said cathode.

14. The acidic gas recovery apparatus according to claim 1 or 2, wherein said regeneration unit has an electrodialysis structure including a four-compartment structure in which a second acidic gas recovery liquid compartment, a first cation exchange membrane, a second acidic gas absorbent compartment, a bipolar membrane, a first acidic gas recovery liquid compartment, a first anion exchange membrane, and a first acidic gas absorbent compartment are arranged in this order between said anode and said cathode.
